# EUROPÄISCHE PATENTANMELDUNG

(11) **EP 0 541 890 A1**
(43) Veröffentlichungstag der Anmeldung: **19.05.1993**
(21) Anmeldenummer: 92104344.4
(22) Anmeldetag: 13.03.1992
(51) Int. Cl.: G02C 1/08, G02C 5/22

(54) **Schraubsicherung für Schliessblöcke an Brillenfassungen mit Metallglasrändern**

(30) Priorität: 09.11.1991 DE 9114045 U
(71) Anmelder: OBE-Werk Ohnmacht & Baumgärtner GmbH & Co. KG, D-75228 Ispringen (DE)
(72) Erfinder: Wagner, Reiner, Dipl.-Ing., W-7536 Ispringen (DE); Lehnert, Otto, W-6920 Sinsheim-Hoffenheim (DE)
(74) Vertreter: Hubbuch, Helmut, Dipl.-Ing

(57) **Zusammenfassung**

Die Erfindung betrifft eine Schraubsicherung für Schließblöcke an Brillenfassungen mit Metallglasrändern, bestehend aus einer beide Schließblöcke an der Augenrandfuge verbindenden Schraube, welche an einem Schließblockteil mittels Schraubkopf aufsitzt oder eingelassen und mittel Schraubenhals durchführbar sowie eingelassen und mittels Schraubenhals durchführbar sowie im zweiten Schließblockteil mit Endgewinde verschraubbar ist, wobei am Schraubenhals ein Kunststoffring mit anschliessendem Ringbund schwach überstehend eingelassen, insbes. eingespritzt ist, welcher mit der Durchgangsbohrung am ersten Schließblockteil unter Reibung beim Eindrehen im Gewinde des zweiten Schließblocks zusammenwirkt. Hierbei treten auch nach mehrmaligem Öffnen und Schließen des Schließblocks praktisch keine Verschleißerscheinungen in Verbindung mit der Sicherungsschraube auf, was für den Brillenglaseinsatz und -Wechsel wesentlich ist.

## Beschreibung

Die Erfindung bezieht sich auf eine Schraubsicherung für Schließblöcke an Brillenfassungen mit Metallglasrändern, bestehend aus einer beide Schließblöcke an der Augenrandfuge verbindenden Schraube.

Es sind solche Schraubsicherungen für Schließblöcke bekannt, bei welchen die Schraube, die an einem Schließblockteil mittels Schraubkopf aufsitzt oder eingelassen und mittels Schraubenhals durchführbar, sowie im zweiten Schließblockteil mit Endgewinde verschraubbar ist. So ist beispielsweise das Einlegen von Kunststoffsträngen in Längsnuten im Gewindeteil der Sicherungsschraube bekannt, welche mit dem Gegengewinde in einem Schließblockteil hemmend zusammenwirken. Diese Kunststoffstränge sind durch das Gewinde nach einigen Öffnungs- und Schließvorgängen unbrauchbar. Nun ergibt sich sowohl bei der Herstellung der Brille als auch beim Einpassen des Brillenglases die Notwendigkeit die linken und rechten Schließblöcke am Brillenglasrand aus Metall zu öffnen und zu schließen, was wie oben gesagt, alsbald zur Zerstörung der in Längsnuten am Gewinde eingelegten Kunststoffstränge führt.

Desweiteren ist nach der DE-OS 33 35 046 bekannt bei solchen Sicherungsschrauben Kunststoffstäbchen im Außengewinde des zweiten Schließblockteils einzulegen und zu verankern, welche sodann umgekehrt mit dem Gewinde an der Sicherungsschraube hemmend zusammenwirken. Dies bringt aber ebenfalls die oben geschilderten Nachteile mit sich. Schließlich ist nach dem DE-GM 88 15 277 bekannt einen Kunststoffring unter dem Kopfrand der Sicherungsschraube anzubringen, welcher mit einem Zackenring in der Einlassung am einen Schließblockteilzusammenwirkt, was nach mehrmaligem Öffnen ebenfalls rasch zum Verschleiß des Kunststoffrings führt.

Es ist nun Aufgabe der Erfindung eine Lösung zu finden, bei welcher auch nach mehrmaligem Öffnen und Schließen des Schließblocks praktisch keine Verschleißerscheinungen in Verbindung mit der Sicherungsschraube auftreten.

Zur Lösung dieser Aufgabe kennzeichnet sich die Schraubsicherung für Schließblöcke der Erfindung dadurch, daß am Schraubenhals ein Kunststoffring mit anschließendem Ringbund schwach überstehend eingelassen, insbes. eingespritzt ist, welcher mit der Durchgangsbohrung am ersten Schließblockteil unter Reibung beim Eindrehen im Gewinde des zweiten Schließblocks zusammenwirkt.

Weitere Einzelheiten bevorzugter Ausführungsbeispiele von Schraubsicherungen gemäß der Erfindung ergeben sich aus der Zeichnung und zwar zeigen:
- Figur 1 und 2: den Schnitt durch einen Schließblock mit Schraubsicherung beim Eindrehen der Schraube und nach der Verbindung,
- Figur 3 und 4: den Schnitt durch einen weiteren Schließblock mit Schraubsicherung beim Eindrehen der Schraube und nach der Verbindung und
- Figur 5 und 6: den Schnitt durch zwei geschlossene Schließblock-Ausführungen einander gegenübergestellt.

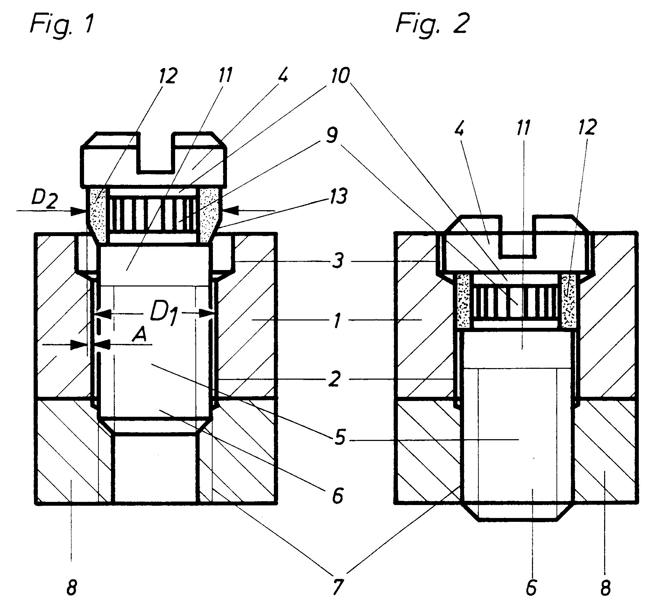

Wie sich aus Fig. 1 und 2 ergibt, besteht der Schließblock für Metallglasränder aus dem einen Schließblockteil 1 mit Durchgangsbohrung 2 und Einsenkung 3 für den Kopf 4 der Sicherungsschraube 5, welche mit ihrem Schraubende 6 im Schraubgewinde 7 des zweiten Schließblockteils 8 zum Verschließen des Schließblocks 1,8 einschraubbar ist. Zur Sicherung gegen ungewolltes Lösen ist an der hier bei 9 gerändelten Einlassung 10 am Schraubenhals mit folgendem Ringbund 11 ein Kunststoffring 12 eingebracht bzw. eingespritzt. Der Kunststoffring 12 läuft bei 13 einbringseitig schwach konisch zu. Das Verhältnis des Durchmessers D₂ des Kunststoffrings 12 zum Durchmesser D₁ der Durchgangsbohrung 2 beträgt hier vorzugsweise von 1,05 bis 1,09, womit sich ein Übermaß A ergibt. Als Kunststoff für den Ring 12 findet vorzugsweise ein amorphes, thermoplastisches Polyetherimid Verwendung. Durch diese Anordnung ergibt sich für die Herstellung und Einpassung der Brillengläser ein öfteres Lösen und Festziehen des Schließblocks 1,8 praktisch ohne Abnutzung des Kunststoffrings 12.

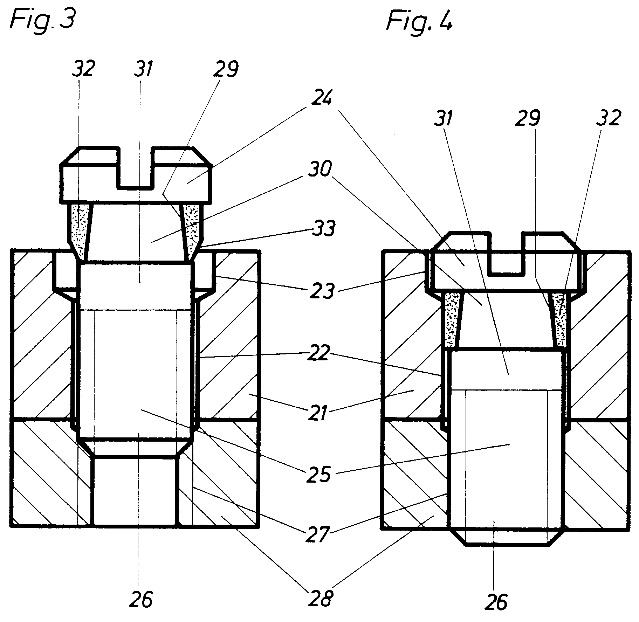

Nach Fig. 3 und 4 besteht der Schließblock für Metallglasränder aus dem einen Schließblockteil 21 mit Durchgangsbohrung 22 und Einsenkung 23 für den Kopf 24 der Sicherungsschraube 25, welche mit ihrem Schraubende 26 im Schraubgewinde 27 des zweiten Schließblockteils 28 zum Verschluß des Schließblocks 21,28 einschraubbar ist. Zur Sicherung gegen ungewolltes Lösen ist hier an der bei 29 sich zum Kopf 24 hin verjüngende Einlassung 30 am Schraubenhals mit folgendem Ringbund 31 ein Kunststoffring 32 eingebracht bzw. eingespritzt. Auch hier läuft der Kunststoffring 32 bei 33 einbringseitig schwach konisch zu und das vorgeschilderte Durchmesserverhältnis D₂ zu D₁ mit entspr. Übermaß A ist gegeben. Durch die beim Kunststoffring im Ganzen gegebene Konizität ergibt sich gegenüber dem selbständigen Lösen eine erhöhte Hemmung gegenüber dem ersten Ausführungsbeispiel.

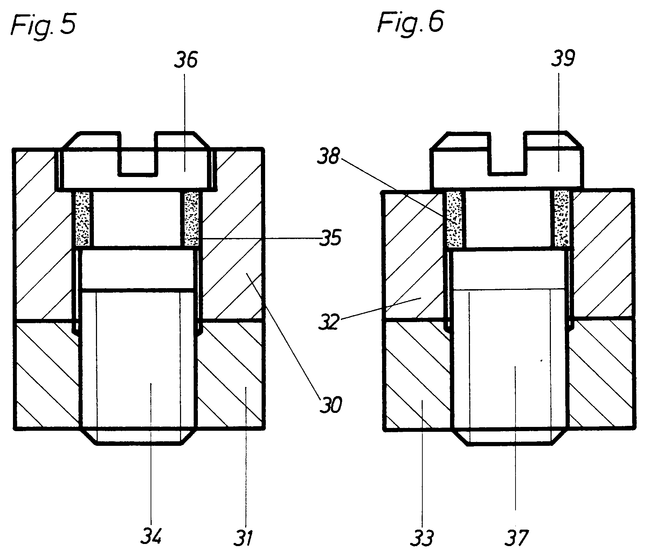

Nach den Fig. 5 und 6 sind schließlich noch zwei Schließblöcke 30,31 und 32,33 einander gegenüber gestellt mit Sicherungsschraube 34 mit Kunststoffring 35 und eingesenktem Schraubkopf 36 sowie Sicherungsschraube 37 mit Kunststoffring 38 und aufgesetztem Schraubkopf 39, um auch diese Variante zu zeigen.

## Patentansprüche

1. Schraubsicherung für Schließblöcke an Brillenfassungen mit Metallglasrändern, bestehend aus einer beide Schließblöcke an der Augenrandfuge verbindenden Schraube, welche an einem Schließblockteil mittels Schraubkopf aufsitzt oder eingelassen und mittels Schraubenhals durchführbar sowie im zweiten Schließblockteil mit Endgewinde verschraubbar ist,
**dadurch gekennzeichnet,** daß am Schraubenhals ein Kunststoffring mit anschließendem Ringbund schwach überstehend eingelassen, insbes. eingespritzt ist, welcher mit der Durchgangsbohrung am ersten Schließblockteil unter Reibung beim Eindrehen im Gewinde des zweiten Schließblocks zusammenwirkt.

2. Schraubsicherung nach Anspruch 1,
**dadurch gekennzeichnet,** daß der Durchmesser des eingelassenen, insbes. eingespritzten Kunststoffrings zum Durchmesser der Durchgangsbohrung an einem Schließblockteil im Verhältnis 1,05 bis 1,09 steht.

3. Schraubsicherung nach Anspruch 1 oder 2,
**dadurch gekennzeichnet**, daß der Schraubenhals mit eingelassenem Kunststoffring sich zum Schraubenkopf hin verjüngt, vorzugsweise unter 6°.

4. Schraubsicherung nach einem der Ansprüche 1 bis 3,
**dadurch gekennzeichnet**, daß der eingelassene, insbes. eingespritzte Kunststoffring am Schraubenhals einbringseitig schwach konisch zuläuft.

5. Schraubsicherung nach einem der vorhergehenden Ansprüche,
**dadurch gekennzeichnet**, daß die Einlassung am Schraubenhals für den Kunsstoffring gerändelt ist.

6. Schraubsicherung nach einem der vorhergehenden Ansprüche,
**dadurch gekennzeichnet**, daß der eingespritzte Kunststoffring aus einem amorphen, thermoplastischen Polyetherimid besteht.
